# EUROPEAN PATENT APPLICATION

(11) **EP 1 249 762 A1**
(43) Date of publication of application: **16.10.2002**
(21) Application number: 01108819.2
(22) Date of filing: 09.04.2001
(51) Int. Cl.: G06F 13/40, G06F 1/18

(54) **External relay box device for computer peripheries**

(71) Applicant: Chang, Cheng-Chun, Wen-Shan DT, Taipei (TW)
(72) Inventor: Chang, Cheng-Chun, Wen-Shan DT, Taipei (TW)
(74) Representative: Helms, Joachim, Dipl.-Ing. Patentanwalt

(57) **Abstract**

An external relay box device for computer peripheries comprises a relay box, a signal cable assembly. The relay box at the front panel thereof provides signal connectors, a circuit board. A box connector is disposed on the circuit board and the circuit board connects with the signal connectors and the box connector for interlinking a signal circuit between the signal connectors and the box connector. The signal cable assembly at an end thereof provides a cable connector to join the box connector and the other end thereof has a plurality of signal wires being formed as a bundle shape and a free end of the bundle at least has a strand of signal wires with a plurality of extended plugs. The extended plugs are inserted into a respective corresponding connector disposed at a rear plate of the computer main unit to allow the signals passing through the box connector so as to extend to each of the signal connector. The relay box device can be placed on any flat table for the peripheries to join the respective corresponding signal connector.

## Description

### BACKGROUND OF THE INVENTION

### 1. Field of The Invention:

The present invention relates to an external relay box device for computer peripheries, and particularly to a relay box device, which is possible for the connectors disposed at the rear plate on the main unit of a computer to connect with a signal cable assembly via the corresponding signal connector provided on a relay box for facilitating the peripheries connecting or disconnecting with the computer.

### 2. Description of Related Art:

Usually, a personal computer provides interfaces at the rear side thereof for connecting with peripheries due to considering the nice appearance for the entire front panel and the structure of main board. Mostly, the periphery interlinking the computer main unit initially is the keyboard, the printer, or the cursor so that there is no trouble at all that the connector of printer or PS2 connector on the computer is disposed at the rear plate while in use. The era of multimedia is coming along with the transmission interface for the computer are improved incessantly such that various peripheries such as the scanner, the CD-RW, the digital camera, the DV camera, the MP3 player, the PDA, the modem, the loudspeaker, and so on are developed successively. It is worth us to note that part of the preceding peripheries are portable but the connector such as the RS-232 port, the USB (Universal Serial Bus) port, or the IEEE port (Fire Wire port) is still mounted at the rear plate on the main unit by the maker of computer so as to give the user a trouble that the computer has to be moved as soon as the peripheries are connected to or disconnected from the computer.

Thus, the manufacture has developed an easy transfer board to improve the shortcoming of the preceding interface device. The easy transfer board is a 3.5 inches' semi-closed box with a circuit board therein to connect with a plurality of signal connectors such as two USB ports, a IEEE 1394 port, a sound line-in port, a sound line-out port, and a RS-232 serial port on the front panel via connecting wires. It is necessary to detach the casing of computer main board before the easy transfer board is fixed in a room for a 3.5" disk drive directly or in a room for a 5.25" disk drive inches by way of a shift frame. Then, an end of signal cable on each signal connector provides a plug to engage with the relay connector on the circuit board and the other end of the signal cable provides a signal connector to engage with each connector on the rear plate of main unit through the main unit and a slot on the rear plate. (It is noted that the signal cable of RS-232 serial port has to be set up inversely.) Finally, the casing is fixed to the main unit again to complete the job of mounting the easy transfer board.

Although it is possible for the preceding transfer board to extend the signal of each connector on the main unit to the front panel thereof such that the portable computer peripheries can be directly connected to the main unit conveniently, it may give the user an increased trouble and difficulty while the transfer board is mounted in the main unit. In addition, all the signal cables being extended independently and not possible to be aggregated may affect the normal run of computer and lead to defects such as generating undesirable signals, interferences, and inferior heat dissipation. Furthermore, it often influences the movement of loading tray in the CD-ROM drive at the time of sliding in/out during the signal wire of each periphery engaging with the signal connector on the transfer board. Even more, it is harmful to the entire sense of beauty of front panel on the main unit.

### SUMMARY OF THE INVENTION

An object of the present invention is to provide an external relay box device for computer peripheries and the relay box device comprises a relay box and a signal cable assembly so as to constitute an easily operated connection between the looking good main unit of computer and the peripheries for the user.

### BRIEF DESCRIPTION OF THE DRAWINGS

The present invention can be more fully understood by referring to the following description and accompanying drawings, in which:
Fig. 1 is a front perspective view of an external relay box device for computer peripheries according to present invention; and
Fig. 2 is a rear perspective view of an external relay box device for computer peripheries according to present invention.

### DETAILED DESCRIPTION OF THE PREFERRED EMBODIMENTS

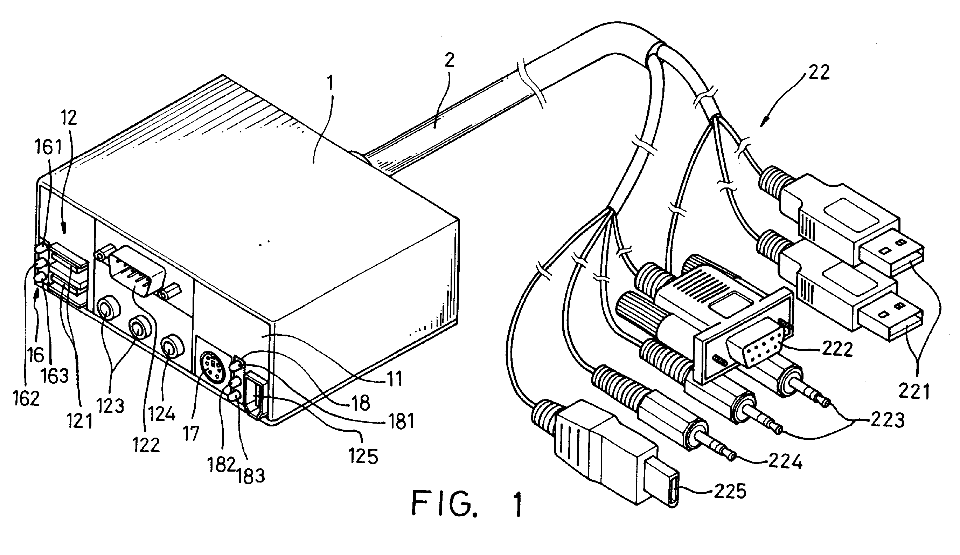

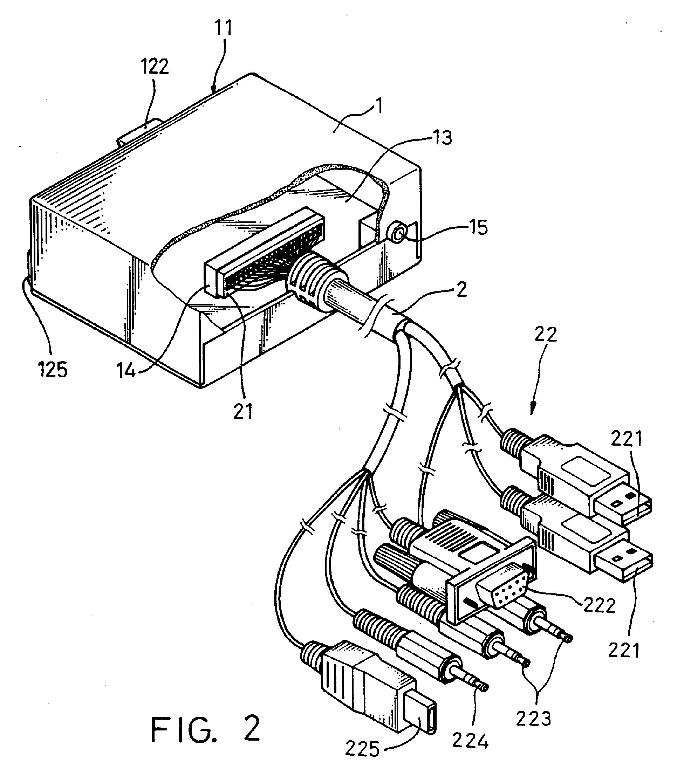

Referring to Fig. 1 and 2, an external relay box device for computer peripheries according to the present invention basically comprises a relay box 1 and a signal cable assembly 2.

Wherein, the relay box 1 at a front panel 11 thereof provides a plurality of signal connectors 12 such as two USB ports 121, a RS-232 serial port 122, a set of sound line-in/line-out ports 123, a microphone port 124 or a IEEE 1394 port 125. Also, a circuit board 13 is mounted in the relay box 1 connects with the signal connectors 12 and a box connector 14 such that the signal circuit corresponding to the signal connectors 12 and the box connector 14 are able to join to each other. For instance, the 1st to the 6th pins in the box connector 14 connect with the first UBS port 121, the 12th to the 16th pins and the 32nd to the 36th pins connect with the RS-232 serial port 122, and so on. Hence, a respective signal between each signal connector 12 and the box connector 14 is independent and separates from each other so that it is not possible to result in any confusion among all signals.

The signal cable assembly 2 is a device with aggregation of long wires and an end of the signal cable assembly 2 provides a cable connector 21 so as to be inserted into the relay box 1 for joining with the box connector 14 and the signal wires at the other end thereof are wrapped as bundles with at least a strand of signal wire bundles. Each bundle of signal wires provides a plurality of extended plugs 22 such as two USB plugs 221, a RS-232 plug 222, a set of sound line-in/line-out plug 223, a microphone plug 224 or a fire wire plug 225. Alternatively, it is belonged to the scope of present invention that the box connector 14 can be disposed on the relay box 1 and the cable connector 21 can join the box connector externally.

In practice, the respective extended plug 22 at an end of the signal cable assembly 2 is inserted into corresponding connector on the computer such as two USB ports, a RS-232 serial port, a set of sound line-out/line-in port, a microphone port, and a IEEE 1394 at the rear plate of main unit respectively. The cable connector 21 at other end of the signal cable assembly 2 is inserted into the box connector 14 for connection. That is, each connector 21 on the main unit is extended to the corresponding signal connector 12. Wherein, the relay box 1 is an independent box, which is possible to be furnished on a flat worktable such as a table top of computer stand. In order to interlink the peripheries such as a portable PDA and a digital camera, the respective periphery and the RS-232 serial port 122 in the signal connector 12 can be connected by a wire for data read or write. A DV camera can also be connected to the IEEE 1394 port 125 in the signal connector 12 to perform the video data picking or editing. Hence, the present invention can conveniently connect or disconnect with the peripheries of computer fast under a condition of being not necessary to move the main unit of computer or of not becoming an obstacle of the panel on the main unit to affect the normal operation of the computer.

Furthermore, in order to promote the facilitation while using the relay box device such as supplying the electric power to the respective periphery, the relay box 1 provides a power source input end 15 to transform the external potential before the current passing through the conventional current limit device (for instance, the current limit fuse) on the circuit board 13. Then, the electricity can be supplied to the USB ports 121 in two signal connectors 12 such that the USB ports 121 can transmit the electricity from the power source to the respective periphery such as a modem, a USB wire aggregator, and so on directly as soon as the USB ports 121 connects with these peripheries. In this way, it is unnecessary to connect with a separate transformer. In order to make sure if a normal power is supplied, an indicator 16 is mounted on the circuit board and three indicating lights 161, 162, and 163 are arranged to appear on the front panel. Once the external power source enters the relay box through the power input end 15, the indicating light 161 is on such that the indicating lights 162 and 163 being on or off indicate two UBS ports 121 being supplied the power or not. Hence, the user can be informed the instant status of power input.

In addition, the present invention further comprises a power output socket 17 such as the DIN socket. After the external power passes through the power input end 15 and the circuit board 13, an end of the transmission line connects with the power output socket 17 directly and the other end thereof connects with the power output socket 17 via a direct current rectifier for a potential adjustment. In this way, it is possible to offer two kinds of working potentials (for instance, 5V and 12V). Wherein, the power output socket 17 can performs to provide the electricity needed by the external box in case of an external CD-RW device being arranged to connect with the IEEE 1394 port 125 for a high speed transmission. In this way, it is possible to waive a trouble with regard to connecting the power source additionally. Similarly, in order to make sure if the IEEE 1394 port 125 and the power output socket 17 are in a normal state, a second indicating device 18 is arranged to connect with the circuit board 13 and three indicating lights are disposed on the panel 11. When a connector plug 225 for the IEEE 1394 port 125 does not properly connects with the IEEE 1394 port, the indicating light 181 is in a state of not on. Once the power output socket 17 is able to offer two kinds of working potentials, the indicating lights 182 and 183 are on simultaneously to inform the user the instant status with regard to the IEEE 1394 port 125 and the two kinds of working potentials of the power output socket 17.

It can be realized from the preceding description of preferred embodiment that the signal cable assembly at an end thereof provides extended plugs to constitute insertion fit with the connectors at the rear plate of computer main unit and the cable connectors at the other end of the signal cable assembly connect with the box connector in the relay box, and then the external power source joins the power input end to complete the relay box device. The relay box device of present invention offers advantages such as it is not necessary for the user to detach the computer main unit while setting up the relay box device, there are no complicated cables in the relay box, and there is no trouble with regard to undesirable signals, interference, and heat dissipation. Furthermore, the relay box can be placed at any flat worktable with a limited length of signal line extending from the panel of main unit such that the operation of other device may not be affected and it is not harmful to the appearance of the entire computer. In addition, the power input end is feasible for the USB port or the power output socket to supply the power simultaneously during the peripheries transmitting data so that it is possible to promote the facilitation of the relay box device. Moreover, the instant statuses of USB ports, IEEE 1394 port, and the power output socket can be indicated by way of two indicator devices with great convenience. Accordingly, the features provided by the present invention are not possible reached by the prior art effectively.

While the invention has been described with reference to preferred embodiment thereof, it is to be understood that modifications or variations may be easily made without departing from the spirit of this invention, which is defined by the appended claims.

## Claims

1. An external relay box device for computer peripheries, comprising
a relay box with a front panel, the panel providing a plurality of signal connectors, a circuit board and a box connector being provided thereon and the circuit board connecting with the signal connectors and the box connector for interlinking a signal circuit between the signal connectors and the box connector; and
a signal cable assembly with two ends, one of the ends providing a cable connector to engage with the box connector, the other one of the ends thereof having a plurality of signal wires being formed as a bundle shape, and a free end of said bundle at least providing a strand of signal wires with a plurality of extended plugs;
whereby, the extended plugs are inserted into a respective corresponding connector disposed at a rear plate of the main unit to allow the signals passing through the box connector so as to extend to each of the signal connector; and the relay box can be furnished on any flat table for the peripheries being able to connect with the respective corresponding signal connector.

2. The external relay box device for computer peripheries according to claim 1, wherein the signal connectors and connectors on a main unit of the computer are two USB ports, a RS-232 series port, a set of sound line-in/line-out plugs, a microphone plug, or a IEEE 1394 port.

3. The external relay box device for computer peripheries according to claim 1, wherein the extended plugs are two USB plugs, a RS-232 plug, a set of sound line-in/line-out plug, a microphone port, or a fire wire plug.

4. The external relay box device for computer peripheries according to claim 1, the relay box device further comprises a power input end to transform the external power source and the transformed external power passes through the circuit and is supply to the two USB ports for being able to pick electricity directly at the time of the peripheries transmitting data.

5. The external relay box device for computer peripheries according to claim 1, wherein the relay box device further comprises a first indicator device disposed on the circuit board with three indicating lights appearing on the front panel for indicating the external power source supply and the two USB ports in a state of normal or abnormal status.

6. The external relay box device for computer peripheries according to claim 1, wherein the relay box device further comprises a power output socket connects with an end of power source line directly after the power source passing through the power input end and the circuit board and the other end of said power source line passing through a direct current rectifier for adjusting potential thereof and then connecting with the power output socket to offer two kind of working potentials directly.

7. The external relay box device for computer peripheries according to claim 1, wherein the relay box device further comprises a second indicating device disposed on the circuit board with three indicating lights appearing on the front panel for indicating the IEEE port of the signal connectors and the two kinds of working potentials of the power output socket being in a state of normal or abnormal statuses.
